# EUROPEAN PATENT APPLICATION

(11) **EP 4 667 189 A1**
(43) Date of publication of application: **24.12.2025**
(21) Application number: 24182829.2
(22) Date of filing: 18.06.2024
(51) Int. Cl.: B29C 64/118, B29C 70/44, B29D 24/00, B33Y 10/00, B33Y 30/00, B33Y 70/10, B33Y 80/00, B29L 31/60

(54) **METHODS AND SYSTEMS FOR PROCESSING A COMPOSITE COMPONENT**

(71) Applicant: Airy Automotive ApS, 2670 Greve (DK)
(72) Inventor: HAUSCHILD, Rasmus Alsing, 2830 VIRUM (DK); LANGE, Gustau Lundegaard, 2400 KØBENHAVN NV (DK)
(74) Representative: Zacco Denmark A/S

(57) **Abstract**

The present invention relates to a method of processing a composite component comprising one or more types of fibers and a thermoplastic. The method comprising: arranging a preliminary composite component (10) comprising a floodable hollow lattice structure (12) within a shaping cavity (116) of a mold (110); injecting a fluid medium into the floodable hollow lattice structure (12) of the preliminary composite component (10); and increasing the temperature of the fluid medium to a processing temperature, thereby: yielding the thermoplastic, and increasing a pressure within the shaping cavity (116) such that a shell surface (14) of the preliminary composite component (10) presses against a surface of the shaping cavity (116) while maintaining a lattice structure within the preliminary composite component (10) and such that both the shell and lattice structures of the preliminary composite component are consolidated. A system for processing the composite component is also presented.

## Description

### Technical field

The present invention generally relates to a method and a system for processing a composite component comprising one or more types of fibers and a thermoplastic.

### Background

Composite materials play a vital role in engineering applications due to their ability to withstand high stress, strains, and shears. However, achieving robust composite structures presents a significant challenge. Interlaminar failure between layers within the laminate is one of the commonly encountered failure modes in composite structures. Fibers lack adequate contact, and this may leave the matrix of the composite structure as the primary load-bearing element. Moreover, the introduction of porosity or voids during manufacturing of composite structures increases the risk of interlaminar failure, compromising the integrity of the composite structure.

Moreover, in manufacturing composite components achieving desired dimensions and surface quality remains a significant constraint. Noticeable variations in dimensions of the manufactured component and inferior surface finish are some of the commonly experienced difficulties.

For example, when manufacturing the composite structures by layer-by-layer printing, i.e. additive manufacturing or three-dimensional, 3D, printing, technology or when processing additively manufactured composite structures, introducing tighter tolerances is a significant restrain. Moreover, weak consolidation between these layers poses a significant concern as it renders the printed structure vulnerable to crack propagation. The consolidation process becomes even more complicated when employing non-planar printing techniques. Additively manufactured composite components in a non-planar mode are prone to complex failure modes under tension, shear, and/or compression forces.

Accordingly, there is a need in the art for new solutions for facilitating developments in manufacturing and/or processing of composite components.

### Summary of the invention

In view of the above, it is an object of the present invention to provide a method and a system that alleviates all or at least some of the above-discussed drawbacks of presently known systems and methods.

According to a first aspect, a method of processing a composite component comprising one or more types of fibers and a thermoplastic is provided. The method comprises: arranging a preliminary composite component comprising a floodable hollow lattice structure within a shaping cavity of a mold; injecting a fluid medium into the floodable hollow lattice structure of the preliminary composite component; and increasing the temperature of the first fluid medium to a first processing temperature. The above processing allows for the following to take place: yielding the thermoplastic; and increasing a pressure within the shaping cavity. By increasing a pressure within the shaping cavity, a shell surface of the preliminary composite component presses against a surface of the shaping cavity while maintaining a lattice structure within the preliminary composite component. Further, by increasing a pressure within the shaping cavity, both the shell and lattice structures of the preliminary composite component may be consolidated.

Accordingly, the fluid medium is provided to the floodable hollow lattice structure of the preliminary composite component. Heating the fluid medium to the processing temperature facilitates the expansion of the fluid medium within the floodable hollow lattice structure. Pressure is built up by the fluid molecules that expand under increased temperature and by means of the hydrostatic pressure within the floodable hollow lattice structure, the shell surface of the preliminary composite component presses towards the inner surface of the shaping cavity. Moreover, heating the fluid medium may heat and reshape the preliminary composite structure, too. Both the shell and lattice structures of the preliminary composite component are consolidated thus facilitating strengthening of the preliminary composite structure. Furthermore, the surface roughness of the composite structure pressing onto the shaping cavity may be improved. A great advantage of the present disclosure is therefore allowing a low-energy, pressure molding process, where pressure from the expansion of the molecules of the fluid medium is employed.

Arranging the preliminary composite component within the shaping cavity may comprise additively manufacturing the preliminary composite component directly onto at least a portion of the surface of the shaping cavity. Moreover, the portion of the surface of the shaping cavity onto which the preliminary composite component is additively manufactured may comprise a bottom surface and side surfaces of the shaping cavity. The bottom surface and side surfaces of the shaping cavity being arranged in a lower die of the mold. Arranging the preliminary composite component within the shaping cavity may further comprises closing the shaping cavity by arranging an upper die of the mold to the lower die. The upper die may comprise a top surface of the shaping cavity.

The method may further comprise evacuating the fluid medium from the shaping cavity.

The method may further comprise cooling the mold.

The method may further comprise flushing the shaping cavity, and thereby the floodable hollow lattice structure of the preliminary composite component, with a second fluid medium having an ambient temperature. The ambient temperature may be in a range of 20-30°C. This allow for a fast cooling of the composite component once it is processed.

The method may further comprise ejecting the processed composite component out of the mold.

The composite component may comprise a 40-60% fiber volume fraction.

The one or more types of fibers may be selected from para-aramid fiber, glass fiber, carbon fiber, and basalt fiber.

The thermoplastic may be selected from polyphenylene sulfide, PPS, polycarbonate, PC, and polyetherimide, PEI. Using thermoplastics may be advantageous due to their recyclability and reusability. This is especially interesting as new legislation enforces OEMs to recycle a minimum of 25% of the plastic. Also, thermoplastics are non-toxic, meaning that no harmful chemicals must be used.

The fluid medium may be selected from demineralized water and a mineral oil. The flushing fluid medium may be selected from demineralized water and a mineral oil.

The floodable hollow lattice structure may be a surface-based lattice structure or a beam-based lattice structure. Examples of surface-based lattice structures are gyroid, voronoi or floodable honey comb. Examples of beam-based lattice structures are body-centered-cubic, BCC, unit-cell, octahedron or Iso truss.

According to a second aspect, a system for processing a composite component comprising one or more types of fibers and a thermoplastic is provided. The system comprises: a mold comprising an upper die and a lower die together forming a shaping cavity; a three-dimensional, 3D, printer configured to, from a filament towpreg comprising the one or more fibers and the thermoplastic, additively manufacture a preliminary composite component having a floodable hollow lattice structure directly onto an inner surface of the lower die; a fluid medium injector configured to inject fluid medium into the floodable hollow lattice structure; and a temperature regulating device configured to increase a temperature of the fluid medium to a processing temperature.

A filament towpreg is a pre-impregnated filament. The towpreg may be woven and then be cured. Using a filament towpreg comprising the one or more fibers and the thermoplastic allow good printing conditions. This since it enables a printing process in which cut, wet and consolidate fibers and plastic in the nozzle system during printing may be avoided.

The fluid medium injector may be configured to inject the fluid medium into the floodable hollow lattice structure during the 3D printer is additively manufacturing the preliminary composite component.

Alternatively, or in combination, the fluid medium injector may be configured to inject the fluid medium into shaping cavity, and thereby into the floodable hollow lattice structure, after the preliminary composite component has been formed by the 3D printer and the shaping cavity has been formed by closing the mold. If so, the fluid medium injector is configured to inject the fluid medium into shaping cavity via a passage through the mold. The passage allowing fluid medium to enter the shaping cavity.

The system may further comprise an evacuating device configured to evacuate the fluid medium from the shaping cavity.

The system may further comprise a mold heater configured to keep the mold at an elevated temperature in the range of 60-100°C during the 3D printing. The mold heater may also contribute to the heating of the fluid medium to the processing temperature.

The system may further comprise a temperature insulated reservoir configured to hold fluid medium evacuated from the shaping cavity.

The above-mentioned features of the method, when applicable, apply to this second aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for the purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Figs. 1 and 2 schematically illustrates a system for manufacturing and processing a composite component.
Fig. 3 is a block diagram of a method of processing a composite component comprising one or more types of fibers and a thermoplastic.

### Detailed description

The present invention will now be described more fully hereinafter with reference to the accompanying drawings, in which currently preferred embodiments of the invention are shown. This invention may, however, be embodied in many different forms.

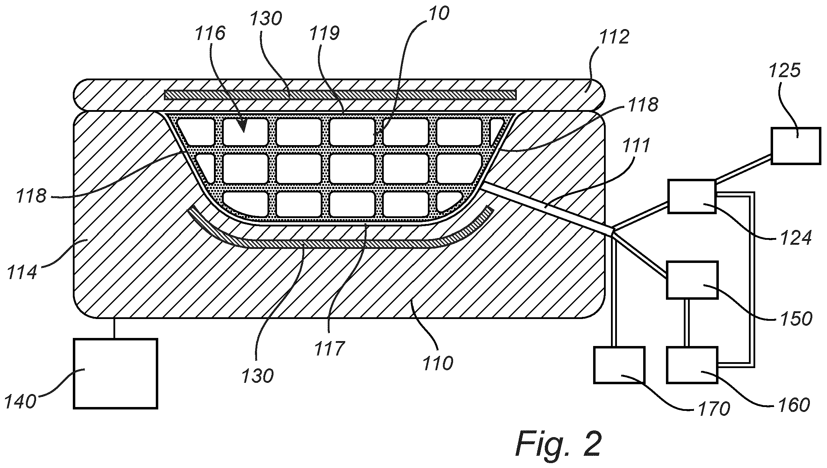

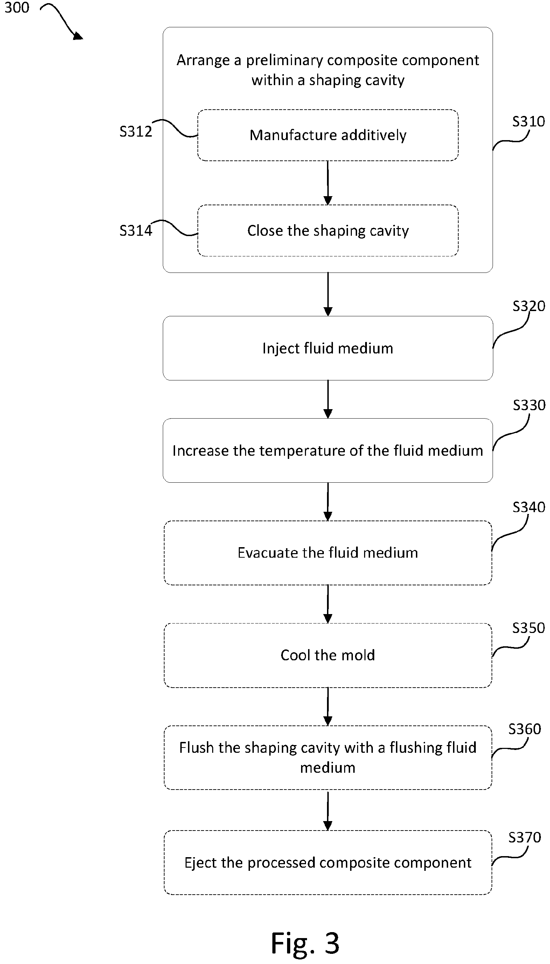

The present invention is directed towards processing of a composite component. Figs 2 and 3 schematically illustrate a system 100 for manufacturing and processing the composite component 10. The composition of the composite component 10 may vary. The composite component 10 may comprise a 40-60% fiber volume fraction. Preferably, the composite component 10 may comprise a 50% fiber volume fraction. The one or more types of fibers may be selected from para-aramid fiber e.g. Kevlar^{®}, glass fiber, carbon fiber, and basalt fiber. The thermoplastic may be selected from polyphenylene sulfide, PPS, polycarbonate, PC, and polyetherimide, PEI. According to some examples, the composite component 10 comprises a plurality of types of fibers and one type of thermoplastic. According to other examples, the composite component 10 comprises one type of fibers and one type of thermoplastic. According to yet other examples, the composite component 10 comprises a plurality of types of fibers and a plurality of types of thermoplastics. According to further other examples, the composite component 10 comprises one type of fibers and a plurality of types of thermoplastics.

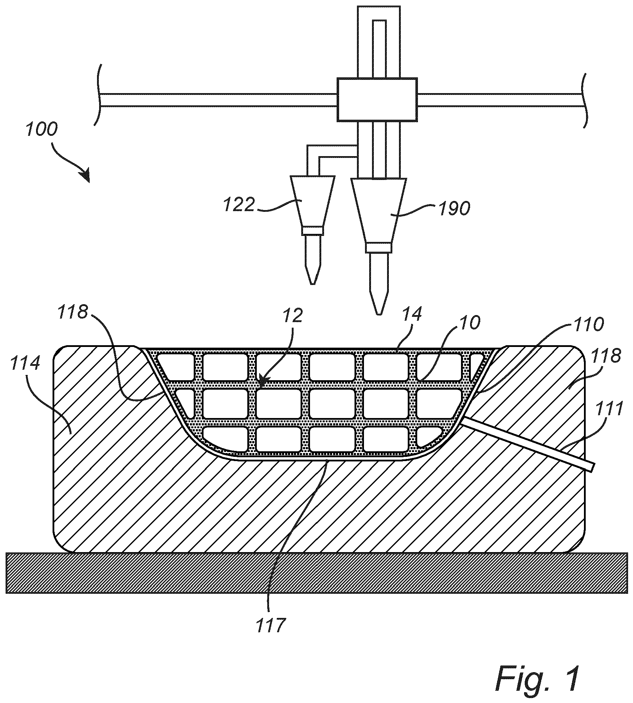

As best seen in Fig. 1, the system 100 comprises a mold 110 and a three-dimensional, 3D, printer 190. The mold 110 is typically a two-split mold comprising an upper die 112 and a lower die 114. In Fig. 1 the mold 110 is illustrated without its upper die 112. The mold 110 and additional parts of the system 100 are illustrated in greater detail in Fig. 2. The upper die 112 and a lower die 114 together form a shaping cavity 116. In Fig. 2 the composite component 10 to be processed by the system is arranged within the shaping cavity 116. The shaping cavity 116 is formed between inner surfaces 117, 118, 119 of the upper die 112 and the lower die 114. The mold 110 may further comprise a passage 111. The passage 111 is configured to allow a fluid medium to exit and/or enter the shaping cavity 116. The passage 111 may be a path, a channel, or course by which the fluid medium may be transferred.

Returning to Fig. 1, the 3D printer 190 is configured to additively manufacture a preliminary composite component 10. Especially, the 3D printer 190 is configured to additively manufacture the preliminary composite component 10 in such way that the preliminary composite component 10 comprises a floodable hollow lattice structure 12 and a shell surface 14. The shell surface 14 surrounds the floodable hollow lattice structure 12, i.e. the shell surface 14 is the outer surface of the composite component 10. The floodable hollow lattice structure 12 will be discussed in more detail below. The 3D printer 190 is configured to additively manufacture the preliminary composite component 10 from a filament towpreg comprising the one or more fibers and the thermoplastic. A filament towpreg is a pre-impregnated filament. The towpreg may be woven and then be cured. The3D printer 190 may use different filament towpreg for forming different portions of the preliminary composite component 10.

As used herein, floodable hollow lattice structure 12 refers to a structure comprising a core structure and internal core cavities, such as a hollow structure. The internal core cavities can be filled up with a fluid medium. The floodable hollow structure 12 is configured such that when filled with the fluid medium, a hydrostatic pressure build-up may be distributed homogenously within the internal core cavities. The floodable hollow lattice structure 12 may be a surface-based lattice structure or beam-based lattice structure. Examples of surface-based lattice structures are gyroid, voronoi or floodable honey comb. Examples of beam-based lattice structures are body-centered-cubic, BCC, unit-cell, octahedron or Iso truss.

The 3D printer 190 may be configured to additively manufacture the preliminary composite component 10 directly onto an inner surface 117, 118 of the lower die 114. The inner surface 117, 118 of the lower die 114 is a portion of a full inner surface of the shaping cavity 116. Specifically, the shaping cavity 116 comprises a bottom surface 117 and side surfaces 118 which typically are arranged or are part of the lower die 114. The shaping cavity 116 further comprises a top surface 119 which typically is arranged or is part of the upper die 112.

Once the preliminary composite component 10 is arranged onto the inner surface 115 of the lower die 114, e.g. by the above discussed 3D-printing, the shaping cavity 116 holding the printed preliminary composite component 10 may be closed. Such closing may be made by arranging the upper die 112 to the lower die 114, see Fig. 2. In such manner, a closed configuration of the shaping cavity 116 may be formed. In the closed configuration, the upper die 112 defines a top surface 119 of the shaping cavity 116.

The system 100 may further comprise a fluid medium injector. The fluid medium injector is configured to inject a fluid medium into the floodable hollow lattice structure 12 of the preliminary composite component 10.

The fluid medium injector may be configured to inject the fluid medium into the floodable hollow lattice structure 12 of the preliminary composite component 10 in the process of additively manufacture the preliminary composite component 10, that is during the 3D printing. This may be performed using a fluid distribution nozzle 122. The fluid distribution nozzle 122 may, as illustrated in connection with Fig. 1, be arranged in connection with the 3D printer 190. Alternatively, the fluid distribution nozzle 122 may be arranged on a dedicated fluid distribution arm. The fluid distribution nozzle 122 being configured to fill the floodable hollow lattice structure 12 with the fluid medium. The filling performed by the fluid distribution nozzle is performed in connection with the 3D printing process. The filling may be intermitted, i.e. performed during a standstill of the 3D printing. The filling may be continuous, i.e. performed while the 3D printing is active.

Alternatively, or in combination, the fluid medium injector may be configured to pump, using a pump 124, the fluid medium into the shaping cavity 116 of the mold 110 via the passage 111 of the mold 110. Specifically, the fluid medium injector may be configured to pump the fluid medium into the shaping cavity 116 such that the fluid medium is injected into the floodable hollow lattice structure 12 of the preliminary composite component 10. In other words, the fluid medium floods the floodable hollow lattice structure 12 of the preliminary composite component 10. The pumping of the fluid medium into the shaping cavity 116 of the mold 110 may be made after the upper die 112 has been arranged to the lower die 114.

The fluid medium may be selected from demineralized water and a mineral oil. The fluid medium may be stored in a fluid medium supply 125. In summary, the fluid medium is injected such that it floods the floodable hollow lattice structure 12 of the preliminary composite component 10.

The system 100 further comprises a temperature regulating device 130. The temperature regulating device 130 is configured to increase a temperature of the fluid medium within the shaping cavity 116 to a processing temperature. The temperature regulating device 130 may be arranged in the mold 110. The temperature regulating device 130 may have one component in the upper die 112 and one component in the lower die 114. The mold 110 may comprise reinforcements providing for maintaining the shape of the mold 110 from the added temperature and pressure. The temperature regulating device 130 may be a temperature controller device configured to bring and maintain the fluid medium's temperature to a processing temperature. Thus, the temperature regulating device 130 may heat the fluid medium to the processing temperature. The temperature regulating device 130 may comprise an on-off PID controller and a temperature sensor for measuring the temperature of the fluid medium. The temperature regulating device 130 may be on until the fluid medium reaches the processing temperature. The processing temperature may be in a range of 130-400°C. By increasing the temperature of the fluid medium, the thermoplastic of the preliminary composite component 10 yields. Further, by increasing the temperature of the fluid medium a pressure build-up of the fluid medium is facilitated such that a pressure within the shaping cavity 116 increases. Pressure within the shaping cavity 116 increases based on the pressure build-up by the molecules of the fluid medium which expand under increased temperature. As a result, the shell surface 14 of the preliminary composite component 100 presses against the inner surfaces 117, 118, 119 of the shaping cavity 116 while maintaining the lattice structure, i.e. the core structure, within the preliminary composite component 10. Accordingly, both the shell surface 14 and the lattice structure of the preliminary composite component 10 are consolidated.

The processing temperature may vary based on the desired pressure build-up and thermoplastic yield. Generally, the processing temperature may be selected based on a number of criteria which are interrelated. A type of fluid medium, a desired pressure level that the shell surface of the preliminary composite component 10 presses against the shaping cavity 116, and a type of thermoplastic may be considered for choosing the processing temperature. For example, when operating with demineralized water as the fluid medium, there is a phase transition in the water transforming from liquid to gas which may be considered. The fraction of air/fluid medium in the inner cavities of the preliminary composite component 10 may influence the pressure at a given processing temperature. Moreover, the processing temperature may be selected based on the thermoplastic used. Specifically, the processing temperature may be selected based on the thermoplastic such that the thermoplastic yields.

The system 100 may further comprise a mold heater 140. The mold heater 140 is configured to keep the mold 110 at an elevated temperature. The mold heater 140 may comprise an on-off PID controller configured to maintain the temperature of the mold 110 in the range of 60-100°C. By maintaining a mold temperature similar to the processing temperature of the 3D printer, adhesion of the composite component 10 to the inner surfaces 117, 118, 119 of the shaping cavity 116 of the mold 110 may be improved.

The system 100 may further comprise an evacuating device 150. The evacuating device 150 is configured to evacuate the fluid medium from the shaping cavity 116. Evacuation of the fluid medium may be made through the passage 111. Alternatively, or in combination, the mold 110 may comprise a second passage, possibly acting as a dedicated evacuation passage, through which evacuation of the fluid medium from the shaping cavity 116 may be made using the evacuating device 150. Specifically, the evacuating device 150 is configured such that fluid medium is evacuated from the floodable hollow lattice structure 12 of the preliminary composite component 10.

The system 100 may further comprise a flushing device 170. The flushing device 170 is configured to flush the shaping cavity 116, and thereby the preliminary composite component 10, with a flushing fluid medium. The flushing fluid medium may have an ambient temperature. The ambient temperature may be in a range of 20-30°C. The flushing fluid medium may be selected from demineralized water and a mineral oil. The flushing fluid medium may be the same type of fluid medium as the fluid medium injected into the floodable hollow lattice structure 12 of the preliminary composite component 10 used for raising temperature and pressure within the shaping cavity 116. The flushing fluid medium may enter the internal cavities of the preliminary composite structure 10 and thereby cool the preliminary composite component 10. Hence, flushing using the flushing fluid medium facilitates accelerated cooling of the preliminary composite component 10. The flushing may be made via the passage 111. Alternatively, or in combination, the mold 110 may comprise a third passage, possibly acting as a dedicated flushing passage, through which flushing may be made using the flushing device 170.

In connection with Fig. 3 a method 300 of processing a composite component 10 will be discussed. The composite component 10 comprises one or more types of fibers and a thermoplastic. As has already been discussed above, the one or more types of fibers may be selected from para-aramid fiber e.g. Kevlar^{®}, glass fiber, carbon fiber, and basalt fiber. The thermoplastic may be selected from polyphenylene sulfide, PPS, polycarbonate, PC, and polyetherimide, PEI. For further details on the composite component 10 reference is made to the above discussion. Typically, all of the steps of the method 300 is performed by the system 100 discussed above. Below, the different steps of the method 300 are described in more detail. Even though illustrated in a specific order, the steps of the method 300 may be performed in any suitable order, in parallel, as well as multiple times.

The method 300 comprises arranging S310 a preliminary composite component 10 within a shaping cavity 116 of a mold 110. As mentioned above, the preliminary composite structure 10 comprises the floodable hollow lattice structure 12 and the shell surface 14 around the floodable hollow lattice structure 12. During the arranging S310 the shell surface 14 is at least partly arranged on an inner surface of the shaping cavity 116.

The method further comprises injecting S320 a fluid medium into the floodable hollow lattice structure 12. As discussed above, the fluid medium may be selected from demineralized water and a mineral oil. The fluid medium is injected S320 such that it enters into the floodable hollow lattice structure of the preliminary composite component 10. The injecting S320 of the fluid medium into the floodable hollow lattice structure 12 will be discussed in more detail below.

Arranging S310 the preliminary composite component 10 within the shaping cavity 116 of the mold 110 may comprise additively manufacturing S312 the preliminary composite component 10. Especially, the additively manufacturing S312 of the preliminary composite component 10 may be made directly onto at least a portion of the inner surface of the shaping cavity 116. This allows directing the fluid medium to cavities of the floodable hollow lattice structure 12. Further, this allows minimizes the fluid medium between the inner surface of the shaping cavity 116 and the shell surface 14 of the preliminary composite structure 10. Specifically, the portion of the inner surface of the shaping cavity 116 onto which the preliminary composite component 10 is additively manufactured S312 comprises a bottom surface 117 and side surfaces 118 of the shaping cavity 116, this is discussed in more detail above in relation with Figs 2 and 3. The bottom surface 117 and side surfaces 118 of the shaping cavity 116 are typically arranged in the lower die 114 of the mold 110. Arranging S310 the preliminary composite component 10 within the shaping cavity 116 of the mold 110 may further comprise closing S314 the shaping cavity 116 by arranging the upper die 112 to the lower die 114. The upper die 112 comprises a top surface 119 of the shaping cavity 116. Thus, the upper die 112 may be perceived as a lid to the shaping cavity 116.

Injecting S320 the fluid medium into the floodable hollow lattice structure 12 and additively manufacturing S312 the preliminary composite component may be made in parallel. This is discussed in greater detail above.

Alternatively, or in combination, injecting S320 the fluid medium into the floodable hollow lattice structure 12may be made after arranging S310 the composite component within the shaping cavity 116, especially after the closing S314 the shaping cavity 116 by arranging the upper die 112 to the lower die 114. Such injecting may be made using the pump 124 to pump in fluid medium into the shaping cavity 116 and thereby fluid medium floods into the floodable hollow lattice structure 12 of the preliminary composite component 10 arranged within the shaping cavity 116. The fluid medium may be pumped into the shaping cavity 116 via the passage 111.

The method 300 further comprises increasing S330 the temperature of the fluid medium to a processing temperature. The processing temperature typically being in a range of 130-400°C. As discussed above, by increasing S330 the temperature of the fluid medium, the thermoplastic of the composite component yields and a pressure build-up of the fluid medium is facilitated such that a pressure within the shaping cavity 116 increases. Pressure within the shaping cavity increases based on the pressure build-up by the molecules of the fluid medium which expand under increased temperature. As a result, the shell surface 14 of the preliminary composite component 10 presses against the inner surfaces of the shaping cavity 116 while maintaining a lattice structure, i.e. the core structure, within the preliminary composite component 10. Accordingly, both the shell and lattice structures of the preliminary composite component 10 are consolidated. The processing temperature may vary based on the desired pressure build-up and thermoplastic yield. More details on the effect of increasing the temperature of the fluid medium can be found above, in order to avoid undue repetition reference is made to the above discussion.

The method may further comprise evacuating S340 the fluid medium from the shaping cavity 116. This implies that the pressure within the shaping cavity 116 is relieved and the temperature of the preliminary composite component 10 is lowered.

Additionally, or alternatively, the method may further comprise cooling S350 the mold 110. By cooling S350 the mold 110, cooling the preliminary composite component 10 may also be achieved. Cooling S350 the mold 110 may be made via cooling channels within the mold 110. A cooling fluid medium may be circulated within such cooling channels. The cooling fluid medium may be selected from demineralized water and a mineral oil. The cooling fluid medium may be the same type of fluid medium as the fluid medium injected into the floodable hollow lattice structure 12 of the preliminary composite component 10 used for raising temperature and pressure within the shaping cavity 116. By circulating cooling fluid medium in the cooling channels within the mold 110 the mold may be cooled efficiently, allowing for a reduced cycle time.

Additionally, or alternatively, the method may comprise flushing S360 the shaping cavity 116, and thereby the preliminary composite component 10, with a flushing fluid medium. The flushing fluid medium may have an ambient temperature. The ambient temperature may be in a range of 20-30°C. The flushing fluid medium may be selected from demineralized water and a mineral oil. The flushing fluid medium may be the same type of fluid medium as the fluid medium injected into the floodable hollow lattice structure 12 of the preliminary composite component 10 used for raising temperature and pressure within the shaping cavity 116. The flushing fluid medium may enter the internal cavities of the preliminary composite structure 10 and thereby cool the preliminary composite component 10. Hence, flushing S360 using the flushing fluid medium facilitates accelerated cooling of the preliminary composite component 10.

Two or more of the evacuating S340, the cooling S350 and the flushing S360 may be made simultaneously.

Generally, the method 300 may comprise cooling of the preliminary composite component 10 immediately after reaching a desired pressure level within the fluid medium and/or the shaping cavity 116.

Whether based on evacuating S320 the fluid medium, or cooling S350 the mold 110, or through flushing S360 with the flushing fluid medium, the resulting cooled composite structure 10 may be referred to as a processed composite component.

The method may further comprise ejecting S370 the processed composite component out of the mold 110. Ejecting S370 of the processed composite component may be at ambient temperature. The ejecting S370 may be made by removing the upper die 112 from the lower die 114, actuating ejection pins arranged within the lower die 114 and removing the processing composite component from the system 100. The removing may be made using a crane.

The person skilled in the art realizes that the present invention by no means is limited to what is explicitly described above. On the contrary, many modifications and variations are possible within the scope of the appended claims.

For example, the system 100 may further comprise a temperature insulated reservoir 160. The temperature insulated reservoir 160 is configured to hold fluid medium evacuated from the shaping cavity 116. By the insulated reservoir 160, fluid medium can be reused for processing of a plurality of composite components. Consequently, the energy needed to heat the fluid medium may be reduced whereby efficient utilization of energy resources can be enhanced. Moreover, by incorporating the temperature insulated reservoir 160 for reusing the same fluid medium for processing of each composite component allows conserving energy significantly. Alternatively, or in combination, energy stored in the fluid medium being held in the temperature insulated reservoir 160 may be used for other purposes, such as heating the building in which the system 100 is located.

Additionally, variations can be understood and effected by the skilled person in practicing the claimed invention, from a study of the drawings, the disclosure, and the appended claims.

## Claims

1. A method (300) of processing a composite component comprising one or more types of fibers and a thermoplastic, the method (300) comprising:
arranging (S310) a preliminary composite component (10) comprising a floodable hollow lattice structure (12) within a shaping cavity (116) of a mold (110);
injecting (S320) a fluid medium into the floodable hollow lattice structure (12) of the preliminary composite component (10); and
increasing (S330) the temperature of the fluid medium to a processing temperature, thereby:
yielding the thermoplastic, and
increasing a pressure within the shaping cavity (116) such that a shell surface (14) of the preliminary composite component (10) presses against a surface of the shaping cavity (116) while maintaining a lattice structure within the preliminary composite component (10) and such that both the shell and lattice structures of the preliminary composite component are consolidated.

2. The method (300) according to claim 1, further comprising evacuating (S340) the fluid medium from the shaping cavity (116).

3. The method (300) according to claim 1 or 2, further comprising cooling (S350) the mold (110).

4. The method (300) according to any one of claims 1-3, further comprising flushing (S360) the shaping cavity (116), and thereby the floodable hollow lattice structure (12) of the preliminary composite component (10), with a flushing fluid medium having an ambient temperature.

5. The method (300) according to any one of claims 2-4, further comprising ejecting (S370) the processed composite component out from the mold (110).

6. The method (300) according to any one of claims 1-5, wherein arranging (S310) the preliminary composite component (10) within the shaping cavity (116) comprises additively manufacturing (S312) the preliminary composite component (10) directly onto at least a portion of the surface of the shaping cavity (116).

7. The method (300) according to claim 6,
wherein the portion of the surface of the shaping cavity (116) onto which the preliminary composite component (10) is additively manufactured comprises a bottom surface (117) and side surfaces (118) of the shaping cavity (116), the bottom surface (117) and side surfaces (118) of the shaping cavity (116) being arranged in a lower die (114) of the mold (110),
wherein arranging the preliminary composite component (10) within the shaping cavity (116) further comprises closing (S314) the shaping cavity (116) by arranging an upper die (112) of the mold (110) to the lower die (114),
wherein the upper die (112) comprises a top surface (119) of the shaping cavity (116).

8. The method (300) according to any one of claims 1-7, wherein the preliminary composite component (10) comprises a 40-60% fiber volume fraction.

9. The method (300) according to any one of claims 1-8,
wherein the one or more types of fibers is selected from para-aramid fiber, glass fiber, carbon fiber, and basalt fiber, and
wherein the thermoplastic is selected from polyphenylene sulfide, PPS, polycarbonate, PC, and polyetherimide, PEI.

10. The method (300) according to any one of claims 1-9, wherein the fluid medium and the flushing fluid medium are selected from demineralized water and a mineral oil.

11. The method (300) according to any one of claims 1-10, wherein the floodable hollow lattice structure (12) is a surface-based lattice structure or a beam-based lattice structure.

12. A system (100) for processing a composite component comprising one or more types of fibers and a thermoplastic, the system (100) comprising:
a mold (110) comprising an upper die (112) and a lower die (114) together forming a shaping cavity (116);
a three-dimensional, 3D, printer (190) configured to, from a filament towpreg comprising the one or more fibers and the thermoplastic, additively manufacture a preliminary composite component (10) having a floodable hollow lattice structure (12) directly onto an inner surface of the lower die (112);
a fluid medium injector configured to inject fluid medium into the floodable hollow lattice structure (12); and
a temperature regulating device (130) configured to increase a temperature of the fluid medium to a processing temperature.

13. The system according to claim 12, wherein the fluid medium injector is configured to inject the fluid medium into the floodable hollow lattice structure (12) during the 3D printer (190) is additively manufacturing the preliminary composite component (10).

14. The system according to claim 12 or 13, wherein the fluid medium injector is configured to inject the fluid medium into shaping cavity (116), and thereby into the floodable hollow lattice structure (12), after the preliminary composite component (10) has been formed by the 3D printer (190) and the shaping cavity (116) has been formed by closing the mold, wherein the fluid medium injector is configured to inject the fluid medium into shaping cavity (116) via a passage (111) through the mold (110), the passage (111) allowing fluid medium to enter the shaping cavity (116).

15. The system according to any one of claims 12-14, further comprising an evacuating device (150) configured to evacuate the fluid medium from the shaping cavity (116).
